# EUROPEAN PATENT SPECIFICATION

(11) **EP 1 474 292 B1**
(45) Date of publication and mention of the grant of the patent: **14.12.2005**
(21) Application number: 03702224.1
(22) Date of filing: 06.02.2003
(51) Int. Cl.: B32B 27/32, B65D 65/40, B65D 75/58

(54) **GAS TIGHT POLYPROPYLENE PEEL FILM**
GASDICHTER ABZIEHBARER POLYPROPYLENFILM
FILM DECOLLABLE EN POLYPROPYLENE ETANCHE AUX GAZ

(30) Priority: 15.02.2002 EP 02447024
(43) Date of publication of application: 10.11.2004
(73) Proprietor: Amcor Flexibles Transpac, 1930 Zaventem (BE)
(72) Inventor: MALFAIT, Tony, B-8880 Rollegem-Kapelle (BE); BÖGELS, Eric, B-3620 Lanaken (BE); ROSSEAU, Patrick, B-1850 Grimbergen (BE); VEYS, Luc, B-9000 Gent (BE)
(74) Representative: Van Malderen, Michel
(86) International application number: PCT/BE2003/000020
(87) International publication number: WO 2003/068506

(56) References cited:
- WO-A-98/01291
- US-A- 5 358 791
- US-A- 5 716 698
- US-A- 5 773 136
- US-A- 5 997 968
- US-A1- 2001 031 371

## Description

### Field of the invention

The present invention is related to a transparent coextruded gas tight peelable seal polyolefin film for packaging applications, and in particular for various types of standing pouches.

### State of the art

In gas-tight food packages different mixtures of gases are added to the content in order to retain the filled product properties such as aromas or freshness during the storage. This implies that the gas has to be kept in the package during the shelf life of the product. The packaging film or laminate constituting the package is therefore required to have low gas and aroma diffusion rates. Barrier properties of individual polymeric packaging materials and different product constructions thereof for various sorts of aromas and gasses, including water vapour, O₂, N₂, CO₂, are known in the prior art.

On the other hand the package should be produced in such a way that it is physically fully closed and that no leakages occur. Absence of leakages is therefore an essential characteristic for gas tight packaging applications. In packaging designs mainly the sealing areas are critical. If the seams are physically unsufficiently joined in the sealing area, the packages will have a high risk of leakages.

If a package in addition to be the gas-tight sealed should also allow an easier opening, the sealing film needs to have peelable characteristics. This implies that the seal strength of the seams cannot be infinite, but should be controllable in such a way that the film is of an easy opening type (e.g. opening without the use of scissors).Peelability and gas-tightness are characteristics that are difficult to match.

The US Patent 5,997,968 discloses a coextruded multilayer polyolefin film for lidding applications comprising an opaque base layer an intermediate layer, and a peelable layer of two incompatible polyolefins. Unfortunately, only one of both polyolefins are disclosed as a polypropylene, the other polymer is defined by its incompatibility with polypropylene and its melting range between 105 and 140°C. This large melting range and the fact that the polymer should be incompatible to the former does no give any indication about the nature of the second polyolefin.

This document further teaches the use of a thin intermediate layer of less than 12µm to avoid delamination and residues during the opening of the peel layer. These specific problems are not observed by the inventor in particular for non-oriented cast or blown coextruded films. Moreover the intermediate layer of 12 µm is too thin to represent a solution for gas tight and zero leakage rate packaging.

The documents US Patent 4,666,778 presents a laminar ethylenic peel layer based on a majority of ethylene polymers or copolymers. These films are not coextruded and have no peel properties on polypropylene based substrates.

Johnson in US patent 5,358,791 discloses a sterilisable multilayer film with two outer layers and a core layer. In this document, the sterilisability is reached by the use of high temperature resistant polymers such as polypropylene and high-density polyethylene. This is totally antagonistic to a request of low-temperature seal or easy flowability needed for gas-tight packaging. Low temperature seal polymers with melting points lower than 135°C exclude the use of HDPE. Furthermore, the weight proportion of the low melting polypropylene should be at least 50%. On the other hand, the addition of HDPE negatively influences the transparency of the films and would produce additional problems between the peelable layer and the outer layer, if the adhesion between the individual layers become too low, a significant risk of layer delamination during opening of the film exists, especially if the adhesion forces are lower than the peel forces.

Kong discloses in US patent application 2001/00 31371-A1 a sealable film with a separable layer. The inner and the sealing layer are basically high melting and high viscosity polymers such as isotactic PP homopolymers or propylene-ethylene bloc copolymers. In this document, the inner layer is described as being polypropylene, high-density polyethylene and ethylenepropylene bloc copolymers. All of them are not low melting and easy flowable materials. This document furthermore precises that the inner layer comprises more than 80% isotactic polypropylene, the low melting polymers used in this case are only present in the sealable layer, which is on top of the separable layer.

For those skilled in the art of peelable structures, it is evident that sealable materials on top of the peelable layer, also called the break-away peel, should be as thin as possible. This kind of sealable layer is broken away before the peel can be opened.

In the US patent 5, 773,136, Alder discloses a multilayer film, wherein the peeling occurs in the intermediate core layer. This OPP film does not contain enough sealable mass because of their limited thickness, to have a tight seal in the faults of e.g a standing pouch. Furthermore, the individual thickness of the base layer is not mentioned in this document, only percentages of the individual layers are given.

### Aims of the invention

The present invention aims to provide a transparent peelable seal film presenting zero leakage properties within a package by introducing an easy flowable intermediary layer able to fill all gaps or voids created within the folds in the sealing area of a package.

### Summary of the invention

The present invention provides a coextruded multilayer polyolefin film of at least three layers, being heat sealable and peelable onto polypropylene based substrates, comprising at least a peelable top layer, at least an intermediary layer and at least a base layer, characterised in that at least one of the intermediate layers comprises an easy flowable low melting polymer with a melt flow index at least equal or higher than the melt flow index of the base layer.

In a first embodiment of the present invention the coextruded multilayer film is characterised in that said easy flowable low melting polymer of at least one of the intermediary layers is selected from the group consisting of copolymers comprising propylene and ethylene, propylene and butylene, propylene and any other olefin having 5-10 carbon atoms.

In a second embodiment of the present invention the coextruded multilayer film is characterised in that said easy flowable low melting polymer of at least one of the intermediary layers is selected from the group consisting of polypropylene terpolymers containing ethylene, propylene, butylene or any other olefin having 5-10 carbon atoms.

In an additional embodiment of the present invention the coextruded multilayer film is characterised in that said easy flowable low melting polymer of at least one of the intermediary layers is selected from the group consisting of syndiotactic polypropylenes.

In a further embodiment of the present invention a coextruded multilayer film is characterised in that said easy flowable low melting polymer of at least one of the intermediary layers is selected from the group consisting of mixtures of the above said polymers with poly 1-butene homopolymers or poly 1-butene ethylene copolymers and/or homogeneous and heterogeneous ethylene alpha-copolymers with a density below 0.920g/cm³.

Another key aspect of the present invention is that said base layer is selected from the group consisting of propylene homopolymers and copolymers of propylene and ethylene, propylene and butylene, propylene and any other olefin having 5-10 carbon atoms, or polypropylene terpolymers containing ethylene, propylene, butylene or any other olefin having 5-10 carbon atoms

An additional key aspect of the present invention is that the easy flowable low melting polymer represents at least 60% by weight of the total weight of the multilayer polymer film and that said film has a thickness of at least 15*µ*m.

The present invention discloses also the use of a coextruded multilayer heat sealable and peelable polymer film in combination with diffusion tight films for gas tight packagings and for various types of gas tight standing pouches.

### Short description of the drawings

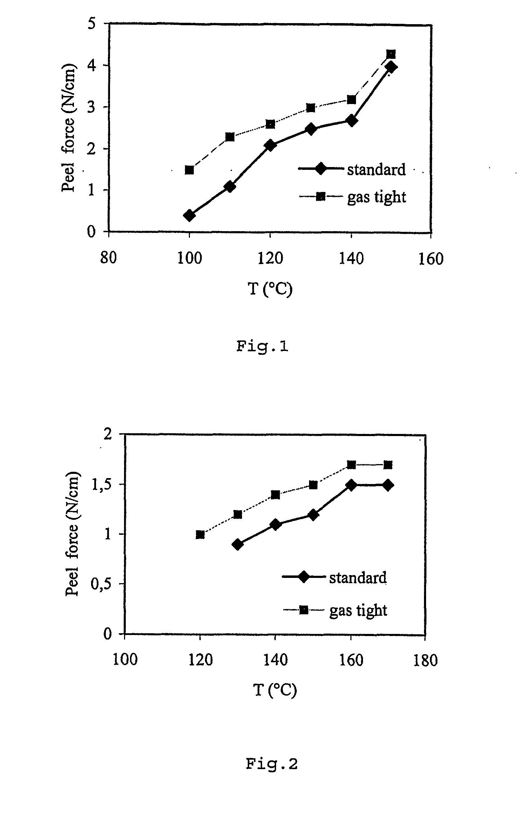

Fig. 1 represents the peel seal curve against itself versus the sealing temperature in a standard version (prior art) and according to the present invention (gas tight).

Fig. 2 represents the peel seal curve against BOPP versus the sealing temperature in a standard version (prior art) and according to the present invention (gas tight).

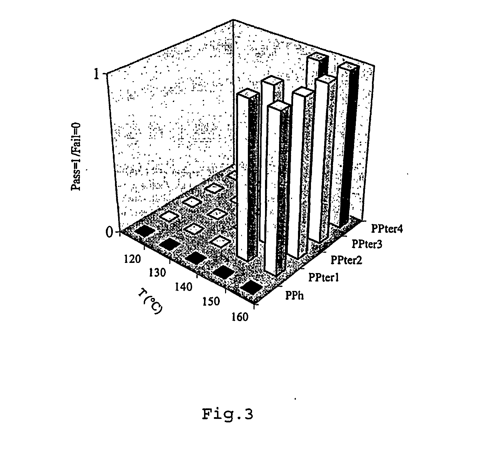

Fig. 3 represents the result of a leakage test in a comparison between the conventional peel film containing a PP homopolymer (PPh) core layer and the gas tight films containing an intermediate core layer with ethylene-butylene PP terpolymer and blends of ethylene-butylene PP terpolymer and homogeneous LLDPE (ρ=0.902g/cm³) in a ratio 90/10 (PPter1), 75/25 (PPter2), 60/40 (PPter3) and 40/60 (PPter2).

### Detailed description of the invention

In the present invention zero leakages are provided by an intermediate coextruded layer between the peelable layer and the base layer. The intermediate layer contains a sufficient amount of easy-flowable low melting polymer. The thickness of such a film reaches approximately 40 µm and the seal/peal layer has only a thickness of approximately 5-8 µm. This means that the intermediate layer has a thickness of approximately 30 µm and the base layer a thickness of approximately 10 µm.

The intermediate layer in the present invention contains low melting PP polymers such as
- copolymers of propylene and ethylene, propylene and butylene, propylene and any other olefin having 5-10 carbon atoms, or
- polypropylene terpolymers containing ethylene, propylene, butylene or any other olefin having 5-10 carbon atoms, or
- syndiotactic polypropylene or
- mixtures of the above said polymers with poly 1-butene and/or homogeneous and heterogeneous branched ethylene alpha-copolymers with a density below 0.920 g/cm³.

The homogeneous and heterogeneous branched ethylene alpha-copolymers with a density below 0.920 g/cm³ should be selected as such that they are sufficiently compatible with the former in order to avoid a distortion of the film optics. Moreover a melt-index of the intermediate layer at least equal or higher than the one of the base layer helps to facilitate the flow during sealing. The melt indexes mentioned in this invention are measured according to ASTM D1238 at a temperature of 190°C and with a load of 2,16 Kg.

### Description of a preferred embodiment of the invention

An 19 *µ*m OPP laminate containing e.g. a 40 *µ*m coextruded film with a 8 *µ*m peelable PP layer based on e.g. Novolen VP 9201 (MI=6, BASF) and a 14 *µ*m homo PP core layer and 18 *µ*m homo PP base layer containing respectively Moplen X30S (MI=8.5, ρ=0.905g/cm³, Basell) and Stamylan P 16E10FC (MI=5.5, ρ=0.905g/cm³, DSM). This construction does not provide a gas-tight package.

A 19 *µ*m OPP laminate however with a 6 *µ*m peelable layer and a 26 *µ*m core layer consisting of 60% Adsyl 5X37F (MI=7, ρ=0.905g/cm³, Basell) and 40 % Exact 0203 (MI=3, ρ=0.902g/cm², Dex plastomers) combined with a base layer of 8 µm Moplen C30S (MI=6, ρ=0.905, Basell) will provide gas-tight packages.

A 19 µm OPP laminate with a 4 µm peelable layer, a 32 µm core layer containing 80% Adeyl 5X37F (MI=7, ρ=0.905g/cm³, Basell) and 25% PB8220 (MI=2, ρ=0.897/cm³, Basell) and 4 µm Stamylan P 16E10FC (MI=5.5, ρ=0.905g/cm³ , DSM) as base layer will also result in a gas-tight package.

### Experimental sealing conditions

Prior to sealing the 40 µm peel seal films were laminated against a 20 µm standard coextruded BOPP film. Peel seal curves were performed on a Kopp sealer. Peelability against itself was evaluated with a pressure of 1.3 bar on the two heated jaws. The sealing dwell time corresponded with 0.5 sec. Peelability onto OPP was evaluated in an A to B sealing with the upper jaw heated and the lower containing a 60 shore A rubber at room temperature. The applied pressure corresponded with 1.3 bar applied during 1 sec.

### Leakage detection

In order to identify leakages small sachets were sealed according to the above sealing conditions. Prior to sealing a rhodamine solution was added to the sachets. The seals were considered as closed if no single visible migration of rhodamine was observed from the inside to the outside of the sacchets (pass-fail test). An alternative test is the under-water Dinkelberg leakage tester with an applied under-pressure (300-760 mbar) selected as such that it does not peel open the package.

## Claims

1. A coextruded multilayer polyolefin film of at least three layers, being heat sealable and peelable onto polypropylene based substrates, comprising at least a peelable top layer, at least an intermediary layer and at least a base layer, **characterised in that** at least one of the intermediate layers comprises an easy flowable low melting polymer with a melt flow index at least equal or higher than the melt flow index of the base layer, said easy flowable polymer representing at least 60% by weight of the total weight of said multilayer polymer film.

2. A coextruded multilayer film as in claim 1, **characterised in that** said easy flowable low melting polymer of at least one of the intermediary layers is selected from the group consisting of copolymers comprising propylene and ethylene, propylene and butylene, propylene and any other olefin having 5-10 carbon atoms.

3. A coextruded multilayer film as in claim 1, **characterised in that** said easy flowable low melting polymer of at least one of the intermediary layers is selected from the group consisting of polypropylene terpolymers containing ethylene, propylene, butylene or any other olefin having 5-10 carbon atoms.

4. A coextruded multilayer film as in claim 1, **characterised in that** said easy flowable low melting polymer of at least one of the intermediary layers is selected from the group consisting of syndiotactic polypropylenes.

5. A coextruded multilayer film as in claim 1, **characterised in that** said easy flowable low melting polymer of at least one of the intermediary layers is selected from the group consisting of mixtures of the above said polymers with poly 2-butene homopolymers or poly 1-butene ethylene copolymers and/or homogeneous and heterogeneous ethylene alpha-copolymers with a density below 0.920 g/cm³.

6. A coextruded multilayer film as in claim 1, **characterised in that** said base layer is selected from the group consisting of propylene homopolymers and copolymers of propylene and ethylene, propylene and butylene, propylene and any other olefin having 5-10 carbon atoms, or polypropylene terpolymers containing ethylene, propylene, butylene or any other olefin having 5-10 carbon atoms.

7. A coextruded multilayer film as in claim 1, wherein the easy flowable lawyer has a thickness of at least 15µm.

8. Gas tight packagings comprising a film as in any of the previous claims.

9. Use of a coextruded multilayer heat sealable and peelable polymer film as defined in any of the previous claims 1 to 8 in combination with diffusion tight films for gas tight packagings.

10. Use of a coextruded multilayer heat sealable and peelable polymer film as in any of the previous claims 1 to 8 for various types of gas tight standing pouches.

## Patentansprüche

1. Eine gemeinsam stranggepresste Mehrschicht-Polyolefin-Folie mit mindestens drei Schichten, die als Heißklebefolie auf ein auf Polypropylen basierendes Trägermaterial aufzubringen und abzuziehen ist, und die aus mindestens einer abziehbaren Oberschicht, mindestens einer Zwischenschicht und mindestens einer Grundschicht besteht, und die sich ferner **dadurch** auszeichnet, dass mindestens eine der Zwischenschichten aus einem leicht fließbaren Polymer mit niedrigem Schmelzpunkt mit einem Schmelz-Index besteht, der mindestens gleich oder größer dem Schmelz-Index der Grundschicht ist; das o.g. leicht fließbare Polymer stellt hierbei einen Gewichtsanteil von mindestens 60% am Gesamtgewicht der besagten Polymer-Folie.

2. Eine gemeinsam stranggepresste MehrschichtFolie gemäß Anspruch 1, **dadurch gekennzeichnet, dass** besagtes leicht fließbare Polymer mit niedrigem Schmelzpunkt bei mindestens einer der Zwischenschichten aus einer Gruppe ausgewählt wird, die aus Copolymeren besteht und zu der Propylen und Ethylen, Propylen und Butylen, Propylen und jedes andere Olefin gehören, das über 5-10 Kohlenstoffatome verfügt.

3. Eine gemeinsam stranggepresste MehrschichtFolie gemäß Anspruch 1, **dadurch gekennzeichnet, dass** besagtes leicht fließbares Polymer mit niedrigem Schmelzpunkt bei mindestens einer der Zwischenschichten aus einer Gruppe ausgewählt wird, die aus Polypropylen-Terpolymeren besteht und zu der Ethylen, Propylene, Butylene und jedes andere Olefin gehören, das über 5-10 Kohlenstoffatome verfügt.

4. Eine gemeinsam stranggepresste MehrschichtFolie gemäß Anspruch 1, **dadurch gekennzeichnet, dass** besagtes leicht fließbare Polymer mit niedrigem Schmelzpunkt bei mindestens einer der Zwischenschichten aus einer Gruppe ausgewählt wird, die aus syndiotaktischen Polypropylenen besteht.

5. Eine gemeinsam stranggepresste MehrschichtFolie gemäß Anspruch 1, **dadurch gekennzeichnet, dass** besagtes leicht fließbare Polymer mit niedrigem Schmelzpunkt bei mindestens einer der Zwischenschichten aus einer Gruppe ausgewählt wird, die aus Mischungen der o.g. Polymere mit Poly-1-Buten-Homopolymeren bzw. Poly-1-Buten-EthylenCopolymeren und/oder homogenen und heterogenen Ethylen-Alpha-Copolymeren mit einer Dichte von weniger als 0,920 g/cm³ bestehen.

6. Eine gemeinsam stranggepresste MehrschichtFolie gemäß Anspruch 1, **dadurch gekennzeichnet, dass** besagte Grundschicht aus einer Gruppe ausgewählt wird, die aus Propylen-Homopolymeren und Copolymeren von Propylen und Ethylen, Propylen und Butylen, Propylen und jedem anderen Olefin besteht, das über 5-10 Kohlenstoffatome verfügt, bzw. aus Polypropylen-Terpolymeren, die Ethylen, Propylen, Butylen und jedes andere Olefin enthalten, das über 5-10 Kohlenstoffatome verfügt.

7. Eine gemeinsam stranggepresste Mehrschicht-Folie wie in Anspruch 1 dargestellt, bei der die leicht fließbare Schicht eine Dicke von mindestens 15 µm aufweist.

8. Gasdichte Verpackungen, die eine Folie wie in einem der o.g. Ansprüche dargestellt enthalten.

9. Die Nutzung einer gemeinsam stranggepressten, abziehbaren Heißklebe- Mehrschicht-Polymer-Folie, wie in einem der oben stehenden Ansprüche 1 bis 8 definiert, zusammen mit einer diffusionsdichten Folie, um gasdichte Verpackungen zu erhalten.

10. Die Nutzung einer gemeinsam stranggepressten, abziehbaren Heißklebe- Mehrschicht-Polymer-Folie, wie in einem der obenstehenden Ansprüche 1 bis 8 definiert, für verschiedene Arten gasdichter Standbeutel.

## Revendications

1. Film coextrudé polyoléfinique multicouche d'au moins trois couches, étant thermosoudable et pelable sur des substrats à base de polypropylène, comprenant au moins une couche supérieure pelable, au moins une couche intermédiaire et au moins une couche de base, **caractérisé en ce qu'**au moins une des couches intermédiaires comprend un polymère facilement fluidifié et à bas point de fusion avec un indice de fluidité au moins égal ou supérieur à l'indice de fluidité de la couche de base, ledit polymère facilement fluidifié représentant au moins 60% en poids du poids total dudit film polymère multicouche.

2. Film coextrudé multicouche selon la revendication 1, **caractérisé en ce que** ledit polymère facilement fluidifié et à bas point de fusion d'au moins une des couches intermédiaires est sélectionné parmi le groupe des copolymères comprenant le propylène et l'éthylène ainsi que le propylène et le butylène, et le propylène et tout autre alcène pourvu de 5 à 10 atomes de carbone.

3. Film coextrudé multicouche selon la revendication 1, **caractérisé en ce que** ledit polymère facilement fluidifié et à bas point de fusion d'au moins une des couches intermédiaires est sélectionné parmi le groupe comprenant les copolymères triples de polypropylène dont l'éthylène, le propylène, le butylène ou tout autre alcène pourvu de 5 à 10 atomes de carbone.

4. Film coextrudé multicouche selon la revendication 1, **caractérisé en ce que** ledit polymère facilement fluidifié et à bas point de fusion d'au moins une des couches intermédiaires est sélectionné parmi le groupe comprenant les polypropylènes syndiotactiques.

5. Film coextrudé multicouche selon la revendication 1, **caractérisé en ce que** ledit polymère facilement fluidifié et à bas point de fusion d'au moins une des couches intermédiaires est sélectionné parmi le groupe comprenant des mélanges desdits polymères susmentionnés avec des homopolymères de polybutène 1 ou des copolymères de polybutène 1 éthylène et/ou des copolymères alpha d'éthylène homogènes et hétérogènes avec une densité inférieure à 0,920 g/cm³.

6. Film coextrudé multicouche selon la revendication 1, **caractérisé en ce que** ladite couche de base est sélectionnée parmi le groupe comprenant les homopolymères de propylène et les copolymères de propylène et d'éthylène, de propylène et de butylène, de propylène et d'autres alcènes pourvus de 5 à 10 atomes de carbone, ou copolymères triples de polypropylène contenant de l'éthylène, du propylène, du butylène ou d'autres alcènes pourvus de 5 à 10 atomes de carbone.

7. Film coextrudé multicouche selon la revendication 1, dans lequel la couche facilement fluidifiée présente une épaisseur d'au moins 15 *µ*m.

8. Emballages étanches au gaz comprenant un film selon l'une quelconque des revendications précédentes.

9. Utilisation d'un film polymère coextrudé multicouche, thermosoudable et pelable selon l'une quelconque des revendications précédentes 1 à 8 en combinaison avec des films anti-diffusion pour des emballages étanches au gaz.

10. Utilisation d'un film polymère coextrudé multicouche, thermosoudable et pelable comme dans l'une quelconque des revendications précédentes 1 à 8 pour différents types de sachets à maintien vertical et étanches au gaz.
